# EUROPEAN PATENT APPLICATION

(11) **EP 4 481 761 A1**
(43) Date of publication of application: **25.12.2024**
(21) Application number: 22921418.4
(22) Date of filing: 30.06.2022
(51) Int. Cl.: G21C 7/12, G21C 19/10

(54) **CONTROL ROD GUIDE TUBE OF NUCLEAR POWER STATION**

(30) Priority: 24.01.2022 CN 202210081755
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: HUANG, Jianxue, Shenzhen, Guangdong 518124 (CN); CHEN, Qiu ying, Shenzhen, Guangdong 518124 (CN); DUAN, Yuangang, Shenzhen, Guangdong 518124 (CN); RAN, Xiaobing, Shenzhen, Guangdong 518124 (CN); LIU, Yanwu, Shenzhen, Guangdong 518124 (CN); SHI, Lin, Shenzhen, Guangdong 518124 (CN); MO, Shaojia, Shenzhen, Guangdong 518124 (CN); WU, Kuomin, Shenzhen, Guangdong 518124 (CN); XIAO, Wei, Shenzhen, Guangdong 518124 (CN); XIONG, Yi, Shenzhen, Guangdong 518124 (CN)
(74) Representative: Greaves Brewster LLP
(86) International application number: PCT/CN2022/102855
(87) International publication number: WO 2023/137987

(57) **Abstract**

The present application provides a control rod guide tube of nuclear power station, including a protective cover (30) and a whole-course guide assembly (40) mounted in the protective cover (30). The whole-course guide assembly (40) includes at least one whole-course continuous guide element. The whole-course continuous guide element is provided with a whole-course continuous guide channel, and the whole-course continuous guide channel performs whole-course continuous guide on at least one control rod in a single control rod assembly within a stroke range of the guide tube. According to the control rod guide tube of nuclear power station, discontinuous guide section structures of guide gratings arranged at intervals are changed into whole-course continuous guide sections formed by long duplex tube structures, such that a control rod stroke protection function is optimized, the risk that the control rod is bent and deformed due to transverse impact of fluid in an upper chamber is reduced, and the integrity of a control rod structure is ensured. In addition, the wear resistance of a specific position of the control rod guide tube is improved, such that the service life of the control rod guide tube is greatly prolonged, and later operation costs are reduced.

## Description

### FIELD OF THE INVENTION

The present invention generally relates to control rod of a pressurized water reactor nuclear power station and, more particularly, relates to a control rod guide tube of nuclear power station.

### BACKGROUND OF THE INVENTION

The control rod drive line of a pressurized water reactor (PWR) mainly includes control rod drive mechanism, pressure vessel tube base, heat sleeve, control rod guide tube and fuel assembly. During the operation of the reactor, the control rod mainly moves up and down along the drive line between the top cap chamber, the upper chamber and the core chamber. Because the control rod is affected by the fluid at different height, if the control rod is not protected, the control rod will swing violently, deviate from the vertical direction, and cannot work normally. Therefore, the control rod guide tube is set to guide and protect the control rod. When the control rod operates in the top cap chamber and the upper chamber, the control rod and the driving rod can move, insert and pull out along the vertical direction of the control rod guide tube. The control rod guide tube provides protection and guidance to ensure that the control rod is protected from fluid impact, to ensure stable operation, and to reduce the influence of the transverse load of the coolant on the drop time in transient and steady operation. In changing the fuel, the control rod is disconnected from the drive rod. In order to ensure the smooth connection of the next drive rod and the control rod, the drive rod should be stored in a suitable position on the drive line. The control rod guide tube provides a proper position for storing the drive rod. The continuous guide assembly inside the control rod guide tube is the component that protects the control rod and ensures that the control rod can be inserted into the core structure quickly when needed.

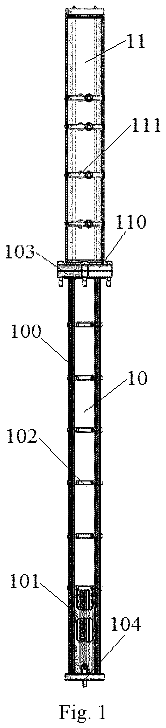

Referring to Fig. 1, a conventional control rod guide tube includes a lower guiding section 10 and an upper guiding section 11 being connected by flanges 110 and 103, and the flanges 110 and 103 are bolted to the upper supporting plate of the upper inner reactor member. The upper guiding section 11 is a cylinder structure having four guiding grills 111 embedded therein. The lower guiding section 10 includes a shell 100, a continuous guiding section 101 and a guiding grill 102. The shell 100 is a square cylinder formed by two half square cylinders via butt-welding, wherein the upper end is welded to the middle flange 103 and the lower end is welded to the lower flange 104. The guiding grill 102 is welded and embedded in the shell 100. The continuous guiding section 101 is a section in the shell 100 near the lower flange 104, including a C-shaped tube and a dual-hole pipe which are arranged between the bottom guiding grill 102 and the lower flange 104. The C-shaped pipe and the dual-hole tube make the whole continuous guiding section 101 to be a continuous guiding. After installation, the continuous guide section is a guiding structure above the fuel assembly, which is in a sensitive position where the core exit fluid turns from vertical to transverse, and plays an important role in the drop performance and structural integrity of the control rod.

In view of the above description, only the continuous guiding section 101 at the lower end of the conventional control rod guide tube can continuously guide the control rod. Except the continuous guiding section 101, the remaining length ranges of the control rod guide tube rely only on the guiding grills 102 and 111 arranged at intervals to guide the control rod, which is discontinuous guidance, which will result in rapid wear at specific locations of the guiding grills 102 and 111, resulting in short service life of the entire control rod guide tube. Therefore, it is often necessary to replace the worn-out control rod guide tube during the life of the reactor.

In view of the foregoing, what is needed, therefore, is to provide a control rod guide tube of nuclear power station which can solve the above-mentioned problem.

### SUMMARY OF THE INVENTION

One object of the present invention is to provide a wear-resistant control rod guide tube of nuclear power station, to prolong the service life of the control rod guide tube of nuclear power station.

According to one embodiment of the present invention, a control rod guide tube of nuclear power station includes a protective cover and a whole-course guide assembly mounted in the protective cover, the whole-course guide assembly includes at least one whole-course continuous guide element, the whole-course continuous guide element is provided with a whole-course continuous guide channel, and the whole-course continuous guide channel performs whole-course continuous guide on at least one control rod in a single control rod assembly within a stroke range of the guide tube.

According to one aspect of the present invention, the whole-course guide assembly also includes a lower flange and a plurality of guiding grills, the lower flange and the guiding grills are distributed along an axial of the whole-course continuous guiding element at intervals, acting as a radial support of the whole-course continuous guiding element, the whole-course continuous guiding element extends through the lower flange and all the guiding grills, and is fixed in the lower flange and all the guiding grills, providing a whole-course continuous guiding channel for the control rod.

According to one aspect of the present invention, the whole-course continuous guide element is a long duplex tube, each long duplex tube defines two guiding holes for performing whole-course continuous guide on two control rods, the number of the long duplex tube is at least two, and each long duplex tube has a guiding hole to perform whole-course continuous guide on one control rod near a center thereof in a single control rod assembly.

According to one aspect of the present invention, the whole-course guide assembly further includes a short-range continuous guide element, the short-range continuous guide element penetrates a bottom guiding grill and a lower flange and is fixed in the bottom guiding grill and the lower flange, the long duplex tube and the short-range continuous guide element jointly form a continuous guiding section for the whole channel of the control rod bundle, to perform continuous guide on all of the control rods between the bottom guiding grill and the lower flange.

According to one aspect of the present invention, the short-range continuous guide element includes a short duplex tube and a C-shaped tube, each short duplex tube is provided with two guiding holes for performing guide on lower sections of the two control rods continuously for a short distance, the short duplex tube has a C-shaped cross section, for performing short-course continuous guiding on lower sections of the control rods other than the short duplex tube and the long duplex tube.

According to one aspect of the present invention, the guiding grill has a circular cross section, two guiding holes of each long duplex tube are located on a same radius of the cross section of the guiding grill, the four long duplex tubes form a "+" shape configuration with a center on the circular cross section of the guiding grill unconnected, four long duplex tubes perform whole-course continuous guidance on four control rods near the center and four peripheral control rods in a single control rod assembly.

According to one aspect of the present invention, the number of short duplex tubes is four, the four short duplex tubes and the four long duplex tubes are set at intervals, a circular cross section of the guiding grill forms a "+" shape configuration with a center unconnected, each short duplex tube performs short-range continuous guidance on lower sections of two control rods located in a same radius in a single control rod assembly, the number of C-shaped tubes is eight, located between the short duplex tube and the long duplex tube respectively, for performing a short-range continuous guide on the lower segments of the eight peripheral control rods.

According to one aspect of the present invention, the lower flange is welded to a lower end of the protective sleeve, and other parts of the whole-course guide assembly are inserted into the protective cover.

According to one aspect of the present invention, the control rod guide tube of nuclear power station further includes a first and/or a second alignment structure fixed on the protective cover, the first alignment structure and the second first alignment structure are clamped into corresponding guiding grill of the whole-course guide assembly, to restrict radial and circumferential motion of the whole-course guide assembly.

According to one aspect of the present invention, the first alignment structure is mounted at the top guiding grill and includes at least two equally spaced pins, a peripheral wall of the top guiding grill is provided with grooves corresponding to the pins, a first end of the pin passes through the upper protective sleeve and is clamped into a corresponding groove of the top guiding grill, and a second end of the pin is soldered and fixed with the upper protective sleeve.

According to one aspect of the present invention, in radial and circumferential direction of the top guiding grill, the first end of the pin is clearance fit with the groove; in an axial direction of the top guiding grill, the groove penetrates the top guiding grill.

According to one aspect of the present invention, the protective cover includes an upper protective sleeve and a lower protective sleeve, a lower end of the upper protective sleeve is provided with a first flange, and an upper end of the lower protective sleeve is provided with a second flange, the upper protection sleeve is coupled to the lower protection sleeve via the first flange and the second flange.

According to one aspect of the present invention, the second alignment structure is installed at the middle guiding grill where the first flange and the second flange are connected, the second alignment structure includes at least two limit assemblies arranged at equal intervals, each limit assembly includes a positioning block and a positioning pin, an outer wall of the middle guiding grill is provided with a slot corresponding to the positioning block, a first end of the positioning block is fixed in the second flange and/or the first flange via a positioning pin, a second end of the positioning block is clamped into a corresponding slot of the middle guiding grill.

According to one aspect of the present invention, in a radial direction of the middle guiding grill, the second end of the positioning block is clamped into the slot and then compacts the middle guiding grill, the second end of the positioning block is provided with an elastic groove, the existence of the elastic groove enables the positioning block to retract appropriately when subjected to radial pressure by the middle guiding grill; in a circumferential direction of the middle guiding grill, the second end of the positioning block is clearance matched with the slot, in an axial direction of the middle guiding grill, the slot penetrates the middle guiding grill.

According to one aspect of the present invention, the first flange and the second flange are fixedly connected to an upper supporting plate of an upper inner reactor member via a fastener.

According to one aspect of the present invention, the control rod guide tube of nuclear power station further includes an elastic open pin arranged below the lower flange, and the lower flange is detachably connected to a core upper plate via the elastic opening pin.

Compared with the prior art, the control rod guide tube of nuclear power station of the present invention changes the discontinuous guide section structure of the guiding grill spaced at interval into a whole-course continuous guide section formed by a long duplex tube structure, to optimize the stroke protection function of the control rod, reduce the risk of bending deformation of the control rod caused by the lateral impact of the fluid in the upper chamber, and ensure the structural integrity of the control rod. In addition, the wear resistance of the control rod guide tube at a specific position is improved, the service life of the control rod guide tube is greatly prolonged and the later operation cost is reduced.

The first alignment structure and the second alignment structure can realize the alignment and positioning of the whole-course guide assembly in the protective cover, which makes the whole-course guide assembly be restricted in radial and circumferential directions, while maintaining axial freedom, so as to eliminate the internal stress caused by the temperature difference between inside and outside of the control rod guide tube in the axial direction, and reduce the stress level of the member in the control rod guide tube.

### BRIEF DESCRIPTION OF THE DRAWINGS

The control rod guide tube of nuclear power station of the present invention will now be described in detail below with reference to the accompanying drawings, in which:
Fig. 1 shows a perspective view of a conventional control rod guide tube;
Fig. 2 shows a perspective view of a control rod guide tube of nuclear power station according to one embodiment of the present invention;
Fig. 3 shows a perspective view of a whole-course guide assembly of the control rod guide tube of nuclear power station of the present invention;
Fig. 4 shows a bottom view of a cross-section of the whole-course guide assembly in Fig. 3 along a line A-A;
Fig. 5 shows a top view of a cross-section of the whole-course guide assembly in Fig. 3 along a line B-B;
Fig. 6 shows a top view of a cross-section of the control rod guide tube along a line C-C in Fig. 2;
Fig. 7 shows an installation view of a pin of a first alignment structure with an upper protective sleeve and a top guiding grill;
Fig. 8 shows a top view of a cross-section of the control rod guide tube along a line D-D in Fig. 2;
Fig. 9 shows an enlarged view of a limiting component in Fig. 8;
Fig. 10 shows an installation view of the limiting component of the first alignment structure with the first flange, the second flange and the middle guiding grill;
Fig. 11 shows a perspective view of an elastic opening pin under the lower flange;
Fig. 12 shows an installation view of the control rod guide tube of nuclear power station of the present invention.

### DETAILED DESCRIPTION OF THE INVENTION

In order to make the objective, technical solutions and technical effects of the present invention clearer, the present invention will be further described in detail below in conjunction with the accompanying drawings and embodiments. It should be understood that the embodiments described herein are only for explaining the present invention, not for limiting the scope of the present invention.

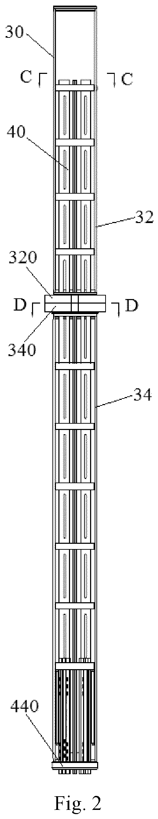

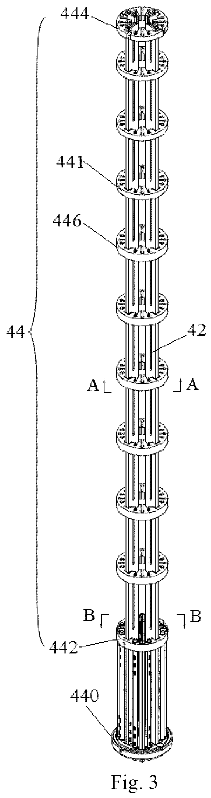

Referring to Figs. 2 to 5, the control rod guide tube of a nuclear power station according to the present invention includes a protective cover 30 and a whole-course guide assembly 40 mounted in the protective cover 30. The whole-course guide assembly 40 includes at least one whole-course continuous guide element. The whole-course continuous guide element is provided with a whole-course continuous guide channel, and the whole-course continuous guide channel performs whole-course continuous guide on at least one control rod in a single control rod assembly within a stroke range of the guide tube.

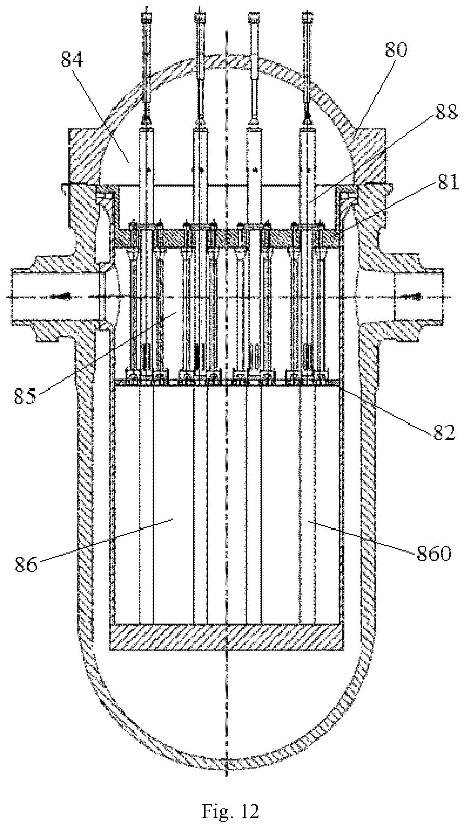

The protective cover 30 includes an upper protective sleeve 32 and a lower protective sleeve 34. The lower end of the upper protective sleeve 32 is provided with a first flange 320, and the upper end of the lower protective sleeve 34 is provided with a second flange 340. The upper protective sleeve 32 and the lower protective sleeve 34 are coupled to each other via the first flange 320 and the second flange 340. The first flange 320 and the second flange 340 are fixedly connected to the upper supporting plate 81 of the upper reactor (as shown in Fig. 12) via a fastener, so as to realize the fixing of the protective cover 30. According to one embodiment of the present invention, the fastener can be a bolt.

The whole-course guide assembly 40 also includes a lower flange 440 and a number of guiding grills 44. The guiding grill 44 includes a common guiding grill 441, a bottom guiding grill 442, a top guiding grill 444, and a middle guiding grill 446 at the connection of the first flange 320 and the second flange 340. The lower flange 440 and the guiding grills 44 are distributed along the axial of the whole-course continuous guiding element at a certain interval, acting as radial supports of the whole-course continuous guiding element. The whole-course continuous guiding element extends through the whole-course guiding component from bottom to top, providing a whole-course continuous guiding channel for the control rod, guiding and protecting the control rod within a stroke range of the guide tube. The whole-course continuous guide element penetrates the lower flange 440 and all of the guiding grills 44 and is fixed in the lower flange 440 and guiding grills 44, preferably via welding. The lower flange 440 is connected to a lower end of the lower protective sleeve 34 of the protective cover 30, and the other parts of the whole-course guide assembly 40 are inserted into the protective cover 30. The guiding grill 44 is distributed between the upper protective sleeve 32 and the lower protective sleeve 34, wherein one guiding grill 44 is located at a joint position between the upper protective sleeve 32 and the lower protective sleeve 34, which is referred as a middle guiding grill 446 to in the specification (the "middle" of the middle guiding grill 446 means that the guiding grill is located approximately in the middle of the control rod guide tube of nuclear power station, not specifically in the middle of the guiding grills) . The lower flange 440 is welded to a lower end of the lower protective sleeve 34.

At least one whole-course continuous guiding channel is arranged in each whole-course continuous guide element, and each whole-course continuous guide channel performs whole-course continuous guide on at least one control rod in a single control rod assembly within a stroke range of the guide tube. Specifically, the whole-course continuous guide element is preferably a long duplex tube 42 having good structural stability. Each long duplex tube 42 defines two guiding holes, which can performs whole-course continuous guide on two control rods. The number of the long duplex tube 42 is at least two, and each long duplex tube 42 has a guiding hole to perform whole-course continuous guide on one control rod near the center thereof in a single control rod assembly.

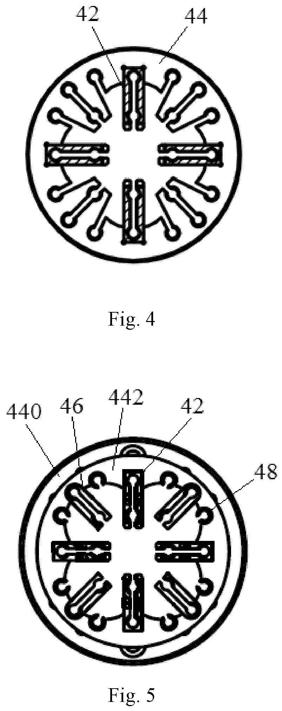

In a single control rod assembly, the four control rods near the center thereof are the most susceptible to wear. Therefore, the number of long duplex tubes 42 is preferably four. Referring to the embodiment shown in Fig. 4, the guiding grill 44 has a circular cross section. Two guiding holes of each long duplex tube 42 are located on a same radius of the cross section of the guiding grill 44. The four long duplex tubes 42 form a "+" shape configuration with a center on the circular cross section of the guiding grill 44 unconnected. Four long duplex tubes 42 provide whole-course continuous guidance to four control rods near the center and four peripheral control rods in a single control rod assembly. The long duplex tubes 42 have good stability and are distributed evenly on the guiding grill 44. The long duplex tubes 42 can provide whole-course continuous guide and protect for the four control rods near the center within a stroke range of the guide tube, so as to reduce the wear failure probability of the control rod guide tube, and increase the service life of the control rod guide tube. According to one embodiment of the present invention, the long duplex tube 42 is fixedly welded to the guiding grill 44.

To guide a control rod other than a long duplex tube 42, the whole-course guide assembly 40 also includes a short-range continuous guide element. The short-range continuous guide element penetrates the bottom guiding grill 442 and the lower flange 440 and is fixed in the bottom guiding grill 442 and the lower flange 440. The long duplex tube 42 and the short-range continuous guide element jointly form a continuous guiding section for the whole channel of the control rod bundle, and all the control rods are continuously guided between the bottom guiding grill 442 and the lower flange 440.

Specifically, the short-range continuous guide element includes a short duplex tube 46 and a C-shaped tube 48. Each short duplex tube 46 is provided with two guide holes, which can guide two control rods continuously for a short distance. The cross section of the short duplex tube 46 has a shape similar to that of the long duplex tube 42. However, the distance between the two guide holes is slightly smaller than the long duplex tube 42. The C-shaped tube 48 has a c-shaped cross section and is used for performing short-range continuous guidance on the lower sections of the control rod other than the short duplex tube 46 and the long duplex tube 42.

Specifically, in the embodiment as shown in Fig. 5, the number of short duplex tubes 46 is preferably four. The four short duplex tubes 46 and the four long duplex tubes 42 are set at intervals. The circular cross section of the guiding grill 44 forms a "+" shape configuration with a center unconnected. Each short duplex tube 46 performs short-range continuous guidance on lower sections of two control rods located in the same radius in a single control rod assembly. The number of C-shaped tubes 48 is 8, located between the short duplex tube 46 and the long duplex tube 42 respectively, thereby performing a short-range continuous guide on the lower segments of the eight peripheral control rods. The long duplex tube 42, the short dual tube 46 and the C-shaped tube 48 jointly form a continuous guide section for the full channel of the control rod bundle, for performing continuous guide on all the control rods between the bottom guiding grill 442 and the lower flange 440, to effectively prevent the bending of the control rod and ensure the dropping performance and the structural integrity of the control rod.

In order to achieve alignment and positioning of the whole-course guide assembly 40 within the protective cover 30, the control rod guide tube of nuclear power station of the present invention also includes a first and/or a second alignment structure fixed on the protective cover 30. The first alignment structure and the second first alignment structure are clamped into the corresponding guiding grill 44 of the whole-course guide assembly 40, so as to restrict the radial and circumferential motion of the whole-course guide assembly 40, but not restrict the axial motion of the whole-course guide assembly 40.

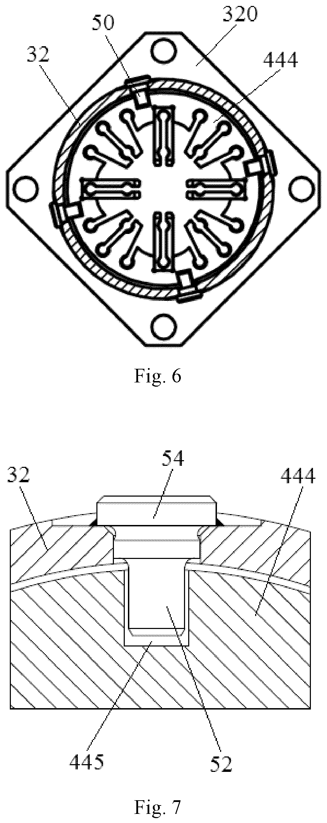

Referring to Figs. 2, 6 and 7, the first alignment structure is mounted at the top guiding grill 444 and includes at least two equally spaced pins 50. The peripheral wall of the top guiding grill 444 is provided with a groove 445 corresponding to the pin 50. The first end 52 of the pin 50 passes through the upper protective sleeve 32 and is clamped into the corresponding groove 445 of the top guiding grill 444, and the second end 54 of the pin 50 is soldered and fixed with the upper protective sleeve 32. In the radial and circumferential direction of the top guiding grill, the first end 52 of the pin 50 is clearance fit with the groove 445, and the radial and circumferential movement of the upper end of the whole-course guide assembly 40 can be limited by the pin 50. In the axial direction of the top guiding grill 444, the groove 445 penetrates the top guiding grill 444, so that the pin 50 does not restrict the axial movement of the whole-course guide assembly 40, keeping the whole-course guide assembly 40 relatively free in the axial direction, to avoid the internal stress of the whole-course guide assembly 40 at the pin 50 due to the different temperature inside and outside the control rod guide tube. The number of pin 50 is preferably 4.

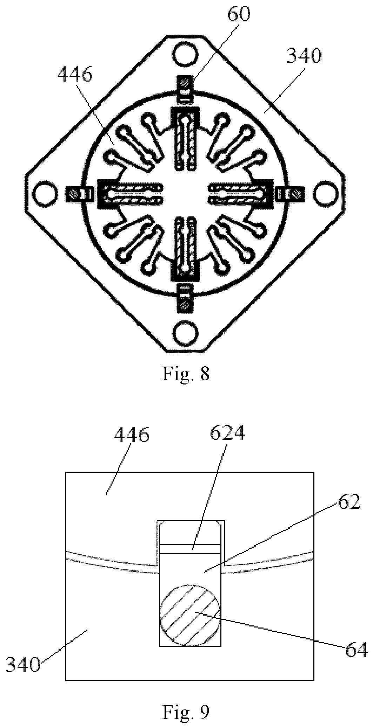

Referring to Figs. 2 and 8-10, the second alignment structure is installed at the middle guiding grill 446 where the first flange 320 and the second flange 340 are connected. The second alignment structure includes at least two limit assemblies 60 arranged at equal intervals. Each limit assembly 60 includes a positioning block 62 and a positioning pin 64. The outer wall of the middle guiding grill 446 is provided with a slot 447 corresponding to the positioning block 62. The first end 621 of the positioning block 62 is fixed in the second flange 340 and/or the first flange 320 via a positioning pin 64, the second end 622 of the positioning block 62 is clamped into the corresponding slot 447 of the middle guiding grill 446: in the radial direction of the middle guiding grill 446, the second end 622 of the positioning block 62 is clamped into the slot 447 and then compacts the middle guiding grill 446. The radial motion of the middle part of the whole-course guide assembly 40 can be restricted by the positioning block 62. Meanwhile, the second end 622 of the positioning block 62 is provided with an elastic groove 624, the existence of the elastic groove 624 enables the positioning block 62 to retract appropriately when subjected to radial pressure by the middle guiding grill 446. In the circumferential direction of the middle guiding grill 446, the second end 622 of the positioning block 62 is clearance matched with the slot 447, and the circumferential motion of the middle part of the whole-course guide assembly 40 can be limited by the positioning block 62. In the axial direction of the middle guiding grill 446, the slot 447 penetrates the middle guiding grill 446, so the positioning block 62 does not restrict the axial movement of the whole-course guide assembly 40, thereby keeping the whole-course guide assembly 40 relatively free in the axial direction, to avoid the internal stress of whole-course guide assembly 40 at the positioning block 62 due to different temperature inside and outside of the whole-course guide assembly 40. The number of the limit assemblies 60 is preferably 4.

It should be understood that the control rod guide tube of nuclear power station of the present invention can be provided with a first alignment structure and a second alignment structure at the same time, or be provided with only one of the first alignment structure and the second alignment structure. In addition, the first alignment structure can be installed not only at the top guiding grill 444, but also at the guiding grill 441 in other locations, such as, at any common guiding grille 441. If necessary, the first alignment structure can also be installed at the bottom guiding grill 442 or the middle guiding grill 446.

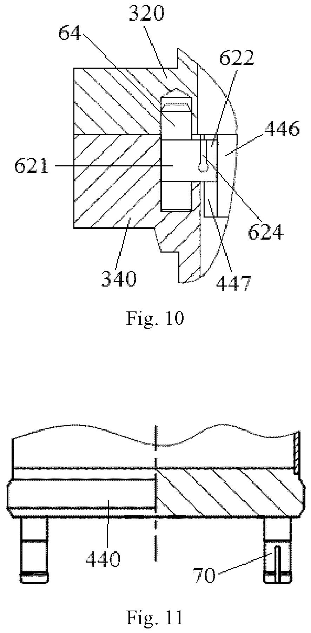

Referring to Fig. 11, the control rod guide tube of nuclear power station of the present invention also includes an elastic open pin 70 arranged below the lower flange 440. As shown in Fig. 12, the lower flange 440 is detachably connected to a core upper plate 82 via the elastic opening pin 70.

Referring to Fig. 12, the upper inner reactor member in the reactor pressure vessel 80 includes an upper supporting plate 81 and a core upper plate 82. The control rod guide tube of nuclear power station of the present invention is installed and fixed on the upper supporting plate 81 and the core upper plate 82. The first flange 320 and the second flange 340 of the protective cover 30 are fixedly connected to the upper supporting plate 81 via a fastener. The lower flange 440 of the whole-course guide assembly 40 is detachably connected to the core upper plate 82 via an elastic opening pin 70, to meet the replacement demand of the control rod guide tube. After installation, the upper part of the control rod guide tube 88 is located in the reactor top cap chamber 84, and the lower part of the control rod guide tube 88 is located in the reactor upper chamber 85. The entire control rod guide tube 88 is located on the reactor control rod drive line, and the lower end is aligned with the fuel assembly 860 in the core chamber 86, providing a guide channel for the control rod assembly 860 to enter the fuel assembly 860. The control rod guide tube of nuclear power station of the present invention provides guidance for the control rod assembly, allows the control rod and the drive rod to move, insert and withdraw along the vertical direction, and protects the control rod, to reduce the influence of the transverse force acting on the rod drop time in transient and steady state operation. When the drive rod connector is detached from the star rack, the drive rod is positioned on the support of the duplex tubes and remains in a vertical position.

According to the foregoing detailed description, the control rod guide tube of nuclear power station of the present invention changes the discontinuous guide section structure of the guiding grill spaced at interval into a whole-course continuous guide section formed by a long duplex tube structure, to optimize the stroke protection function of the control rod, reduce the risk of bending deformation of the control rod caused by the lateral impact of the fluid in the upper chamber, and ensure the structural integrity of the control rod. In addition, the wear resistance of the control rod guide tube at a specific position is improved, the service life of the control rod guide tube is greatly prolonged and the later operation cost is reduced.

Compared with the prior art, the control rod guide tube of nuclear power station of the present invention has the following advantages:
1) Due to the arrangement of the at least one whole-course continuous guide element, the guide and stroke protection functions of the control rod at a specific position are optimized, the risk of the control rod bending deformation caused by fluid impact on the control rod is reduced, and the structural integrity of the control rod is ensured.
2) At least one continuous guiding element is set in a specific position, which can reduce the influence of the lateral disturbance of fluid by optimizing the continuous guiding function, make the operation of the control rod and the process of rod dropping more smoothly, and improve the performance of the control rod drive line.
3) Arrangement of at least one continuous guiding element in a specific position can greatly improve the wear resistance of the sensitive area of the control rod guide tube, reduce the wear failure probability of the control rod guide tube, and prolong the service life of the control rod guide tube.
4) The long duplex tube 42, the short duplex tube 46 and the C-shaped tube 48 jointly form the full channel continuous guiding segment of the control rod bundle, and all the control rods are continuously guided between the bottom guiding grill 442 and the lower flange 440, which can effectively prevent the control rod from bending and ensure the dropping performance and structural integrity of the control rod.
5) Long dual pipe 42 is used to connect lower flange and all guiding grills 44 in series, which simplifies the structure and is easy to manufacture.
6) The first alignment structure and the second alignment structure can realize the alignment and positioning of the whole-course guide assembly 40 in the protective cover 30, which makes the whole-course guide assembly 40 be restricted in radial and circumferential directions, while maintaining axial freedom, so as to eliminate the internal stress caused by the temperature difference between inside and outside of the control rod guide tube in the axial direction, and reduce the stress level of the member in the control rod guide tube.
7) Due to the structures of the first alignment structure, the second alignment structure and the bottom welding connection structure, the structural stiffness of the whole-course guide assembly 40 is improved, and the amplitude and stress of flow-induced vibration are limited.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A control rod guide tube of nuclear power station, **characterized in that**, the control rod guide tube of nuclear power station comprises a protective cover (30) and a whole-course guide assembly (40) mounted in the protective cover (30), the whole-course guide assembly (40) comprises at least one whole-course continuous guide element, the whole-course continuous guide element is provided with a whole-course continuous guide channel, and the whole-course continuous guide channel performs whole-course continuous guide on at least one control rod in a single control rod assembly within a stroke range of the guide tube.

2. The control rod guide tube of nuclear power station of claim 1, **characterized in that**, the whole-course guide assembly (40) also comprises a lower flange (440) and a plurality of guiding grills (44), the lower flange (440) and the guiding grills (44) are distributed along an axial of the whole-course continuous guiding element at intervals, acting as a radial support of the whole-course continuous guiding element, the whole-course continuous guiding element extends through the lower flange (440) and all the guiding grills (44), and is fixed in the lower flange (440) and all the guiding grills (44), providing a whole-course continuous guiding channel for the control rod.

3. The control rod guide tube of nuclear power station of claim 2, **characterized in that**, the whole-course continuous guide element is a long duplex tube (42), each long duplex tube (42) defines two guiding holes for performing whole-course continuous guide on two control rods, the number of the long duplex tube (42) is at least two, and each long duplex tube (42) has a guiding hole to perform whole-course continuous guide on one control rod near a center thereof in a single control rod assembly.

4. The control rod guide tube of nuclear power station of claim 3, **characterized in that**, the whole-course guide assembly (40) further comprises a short-range continuous guide element, the short-range continuous guide element penetrates a bottom guiding grill (442) and a lower flange (440) and is fixed in the bottom guiding grill (442) and the lower flange (440), the long duplex tube (42) and the short-range continuous guide element jointly form a continuous guiding section for the whole channel of the control rod bundle, to perform continuous guide on all of the control rods between the bottom guiding grill (442) and the lower flange (440).

5. The control rod guide tube of nuclear power station of claim 4, **characterized in that**, the short-range continuous guide element comprises a short duplex tube (46) and a C-shaped tube (48), each short duplex tube (46) is provided with two guiding holes for performing guide on lower sections of the two control rods continuously for a short distance, the short duplex tube (46) has a C-shaped cross section, for performing short-course continuous guiding on lower sections of the control rods other than the short duplex tube (46) and the long duplex tube (42).

6. The control rod guide tube of nuclear power station of claim 1, **characterized in that**, the number of long duplex tubes (42) is four, the guiding grill (44) has a circular cross section, two guiding holes of each long duplex tube (42) are located on a same radius of the cross section of the guiding grill (44), the four long duplex tubes (42) form a "+" shape configuration with a center on the circular cross section of the guiding grill (44) unconnected, four long duplex tubes (42) perform whole-course continuous guidance on four control rods near the center and four peripheral control rods in a single control rod assembly.

7. The control rod guide tube of nuclear power station of claim 6, **characterized in that**, the number of short duplex tubes (46) is four, the four short duplex tubes (46) and the four long duplex tubes (42) are set at intervals, a circular cross section of the guiding grill (44) forms a "+" shape configuration with a center unconnected, each short duplex tube (46) performs short-range continuous guidance on lower sections of two control rods located in a same radius in a single control rod assembly, the number of C-shaped tubes (48) is eight, located between the short duplex tube (46) and the long duplex tube (42) respectively, for performing a short-range continuous guide on the lower segments of the eight peripheral control rods.

8. The control rod guide tube of nuclear power station of claim 2, **characterized in that**, the lower flange (440) is welded to a lower end of the protective sleeve (34), and other parts of the whole-course guide assembly (40) are inserted into the protective cover (30).

9. The control rod guide tube of a nuclear power station of claim 2, **characterized in that**, the control rod guide tube of nuclear power station further comprises a first and/or a second alignment structure fixed on the protective cover (30), the first alignment structure and the second first alignment structure are clamped into corresponding guiding grill (44) of the whole-course guide assembly (40), to restrict radial and circumferential motion of the whole-course guide assembly (40).

10. The control rod guide tube of nuclear power station of claim 9, **characterized in that**, the first alignment structure is mounted at the top guiding grill (444) and comprises at least two equally spaced pins (50), a peripheral wall of the top guiding grill (444) is provided with grooves (445) corresponding to the pins (50), a first end (52) of the pin (50) passes through the upper protective sleeve (32) and is clamped into a corresponding groove (445) of the top guiding grill (444), and a second end (54) of the pin (50) is soldered and fixed with the upper protective sleeve (32).

11. The control rod guide tube of nuclear power station of claim 10, **characterized in that**, in radial and circumferential direction of the top guiding grill, the first end (52) of the pin (50) is clearance fit with the groove (445); in an axial direction of the top guiding grill (444), the groove (445) penetrates the top guiding grill (444).

12. The control rod guide tube of nuclear power station of claim 9, **characterized in that**, the protective cover (30) comprises an upper protective sleeve (32) and a lower protective sleeve (34), a lower end of the upper protective sleeve (32) is provided with a first flange (320), and an upper end of the lower protective sleeve (34) is provided with a second flange (340), the upper protection sleeve (32) is coupled to the lower protection sleeve (34) via the first flange (320) and the second flange (340).

13. The control rod guide tube of nuclear power station of claim 13, **characterized in that**, the second alignment structure is installed at the middle guiding grill (446) where the first flange (320) and the second flange (340) are connected, the second alignment structure comprises at least two limit assemblies (60) arranged at equal intervals, each limit assembly (60) comprises a positioning block (62) and a positioning pin (64), an outer wall of the middle guiding grill (446) is provided with a slot (447) corresponding to the positioning block (62), a first end (621) of the positioning block (62) is fixed in the second flange (340) and/or the first flange (320) via a positioning pin (64), a second end (622) of the positioning block (62) is clamped into a corresponding slot (447) of the middle guiding grill (446).

14. The control rod guide tube of nuclear power station of claim 13, **characterized in that**, in a radial direction of the middle guiding grill (446), the second end (622) of the positioning block (62) is clamped into the slot (447) and then compacts the middle guiding grill (446), the second end (622) of the positioning block (62) is provided with an elastic groove (624), the existence of the elastic groove (624) enables the positioning block (62) to retract appropriately when subjected to radial pressure by the middle guiding grill (446); in a circumferential direction of the middle guiding grill (446), the second end (622) of the positioning block (62) is clearance matched with the slot (447), in an axial direction of the middle guiding grill (446), the slot (447) penetrates the middle guiding grill (446).

15. The control rod guide tube of nuclear power station of claim 12, **characterized in that**, the first flange (320) and the second flange (340) are fixedly connected to an upper supporting plate (81) of an upper inner reactor member via a fastener.

16. The control rod guide tube of nuclear power station of claim 2, **characterized in that**, the control rod guide tube of nuclear power station further comprises an elastic open pin (70) arranged below the lower flange (440), and the lower flange (440) is detachably connected to a core upper plate (82) via the elastic opening pin (70).
